# NOUVEAU FASCICULE DE BREVET EUROPEEN

(11) **EP 1 500 553 B2**
(45) Date de publication et mention de la décision concernant l'opposition: **05.06.2013**
(45) Mention de la délivrance du brevet: 14.11.2007
(21) Numéro de dépôt: 04291793.0
(22) Date de dépôt: 13.07.2004
(51) Int. Cl.: B60Q 1/12

(54) **Projecteur lumineux fixe de virage pour véhicule automobile**
Starrer Kurvenscheinwerfer für Kraftfahrzeuge
Fixed cornering headlamp for motor vehicles

(30) Priorité: 24.07.2003 FR 0309093
(43) Date de publication de la demande: 26.01.2005
(73) Titulaire: VALEO VISION, 93012 Bobigny Cedex (FR)
(72) Inventeur: Leleve, Joël, 93800 Epinay sur Seine (FR)

(56) Documents cités:
- DE-A- 19 923 187
- DE-A1- 10 017 878
- DE-A1- 10 104 773
- DE-A1- 19 719 573
- DE-A1- 19 860 461
- DE-A1- 19 950 135
- FR-A- 2 811 621
- GB-A- 178 234
- US-A1- 20020 171 543
- US-B1- 6 476 726

## Description

L'invention est relative à un projecteur lumineux fixe de virage pour véhicule automobile.

Un tel projecteur est prévu pour éclairer le mieux possible vers l'intérieur du virage les portions de route que le véhicule va aborder.

EP-A-0 864 462 propose un système d'éclairage comportant au moins deux projecteurs du type antibrouillard et des moyens pour commander la puissance d'alimentation des projecteurs en fonction d'une information de braquage des roues du véhicule. Ces moyens de commande n'augmentent la puissance d'alimentation que du seul projecteur de virage qui est du côté vers lequel tourne le véhicule, de façon à accentuer l'éclairage de ce côté. La proportionnalité au virage est ainsi obtenue par modulation de l'intensité du faisceau ; l'effet perçu par le conducteur peut être considére comme une prestation moyenne.

On connaît, par exemple des documents DE-A-199 23 187, FR-A-2 811 621 ou GB-A-178 234, des systèmes d'éclairage comportant plusieurs dispositifs émetteurs de faisceaux lumineux, les axes des faisceaux lumineux émis par ces dispositifs étant inclinés par rapport à l'axe longitudinal du véhicule, de manière à ce que les faisceaux lumineux éclairent vers l'intérieur du virage les portions de route que le véhicule va aborder.

Le préambule de la revendication 1 est par ailleurs connu du document DE-A-199 23 187.

Pour obtenir un effet plus satisfaisant, on peut assurer un suivi de virage par entraînement en rotation d'un système optique, ce qui implique des pièces mobiles, des actionneurs et une électronique de commande, donc un coût élevé.

L'invention a pour but, surtout, de fournir un projecteur lumineux fixe de virage qui, tout en restant d'un coût acceptable, permet d'obtenir un effet amélioré de suivi du virage.

L'invention propose un projecteur lumineux conforme à la revendication 1.

Selon l'invention, l'ouverture du faisceau lumineux des sources est de plus en plus grande vers l'intérieur du virage suivant l'ordre d'allumage des sources.

De préférence, le projecteur comporte au moins quatre sources lumineuses propres à être allumées successivement pour assurer un défilement du faisceau lumineux et un suivi du virage.

La source qui précède, dans l'ordre d'allumage, peut rester allumée lorsque la source suivante est allumée. En variante, la source qui précède est éteinte (totalement ou partiellement) lorsque la source suivante est allumée

Il peut aussi s'agir d'un groupement de plusieurs d'au moins deux de ces modules. Dans ce cas, on peut avoir plusieurs groupements de modules, chaque diode dans un groupement étant dans le même état (éteinte ou allumée) que les autres diodes dudit groupement.

L'allumage de chaque diode électroluminescente peut être assuré par un transistor commandé par une unité de contrôle qui reçoit le signal de braquage, en particulier en provenance d'un capteur de volant.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est un schéma en perspective d'une installation d'éclairage sur véhicule comprenant deux projecteurs lumineux fixes de virage pour illustrer certains aspects de l'invention.
Fig. 2 est une vue schématique en plan à plus grande échelle du projecteur lumineux situé sur le côté droit du véhicule.
Fig. 3 est une coupe verticale schématique d'un module à LED.
Fig. 4 est un schéma de disposition des modules à LED selon l'invention.
Fig. 5 est une vue schématique de dessus de l'avant du véhicule équipé de projecteurs.
Fig. 6 est un schéma d'un circuit de commande des sources lumineuses, et
Fig. 7 est un diagramme avec plusieurs lignes, illustrant divers modes de commande de l'allumage des LEDs.

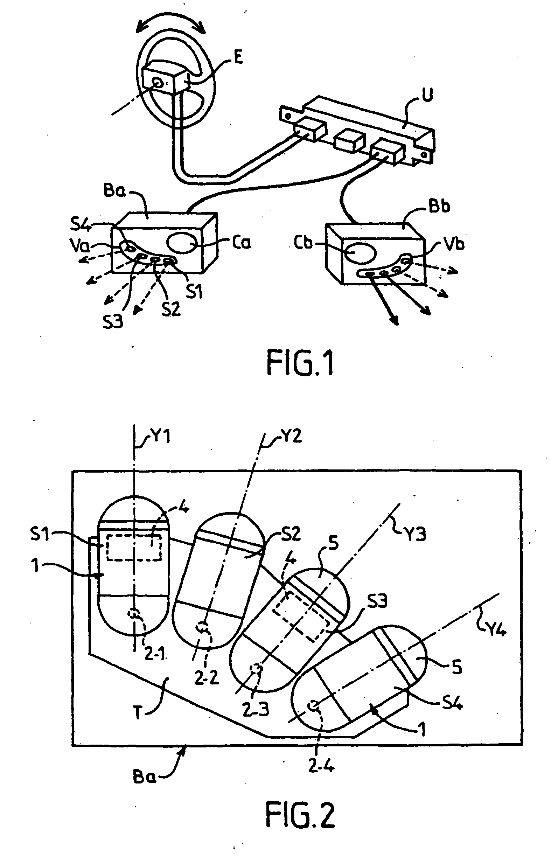

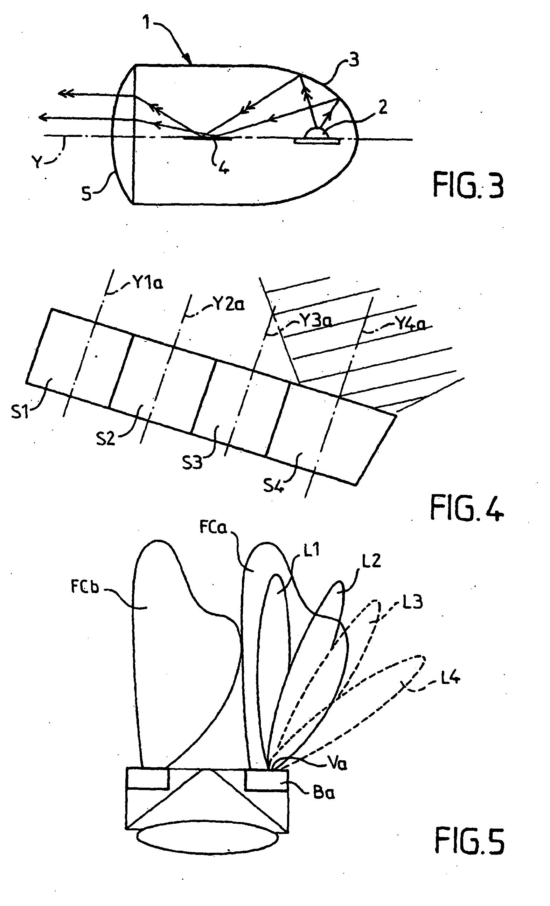

les figures 2 et 5 ne font pas partie de l'invention. En Fig.1, les axes optiques des sources lumineuses qui sont illustrés ne sont pas conformes à l'invention.

En se reportant à Fig. 1 des dessins, on peut voir une partie d'installation d'éclairage, sur véhicule automobile, qui comporte de chaque côté, à l'avant du véhicule, un projecteur lumineux fixe de virage Va situé à droite et Vb situé à gauche. Le projecteur de virage peut être logé dans le même boîtier Ba, Bb que le projecteur code Ca, Cb correspondant. Chaque boîtier est relié par un câble multiconducteur à une unité de commande U.

Des moyens sensibles à la trajectoire du véhicule comprennent un capteur de volant E et fournissent à l'unité U un signal dépendant de la nature de la route suivie par le véhicule.

Chaque projecteur fixe de virage Va, Vb comporte au moins deux et de préférence quatre sources lumineuses S1, S2, S3, S4 schématisées sur Fig. 2 pour le projecteur de virage Va.

Chaque source lumineuse est avantageusement constituée par un module 1 (Fig. 3) à diode électroluminescente 2. Les sources lumineuses sont montées sur un support T logé dans le boîtier Ba. Les modules S1-S4 sont montés avec une possibilité de réglage de leur orientation, tout en restant conforme à la revendication 1.

Chaque module 1 comporte un réflecteur 3 semi-ellipsoïdal d'axe optique Y. Une LED 2 est située au foyer intérieur du réflecteur 3 et est orientée de manière que l'axe de son faisceau lumineux soit orthogonal à l'axe optique Y-Y. Le faisceau renvoyé par le réflecteur 3 tombe sur une plaque 4 métallique réfléchissante, généralement appelée « plieuse », qui peut être plane comme illustrée sur Fig. 3, ou pliée en forme de dièdre. La plaque 4 est située au foyer externe du réflecteur 3, ou à son voisinage. Une lentille convergente 5 est placée en sortie du module 1. Selon la forme de la plieuse 4, le module 1 peut donner un faisceau à coupure plate ou à coupure en V. Dans l'application considérée, le faisceau lumineux obtenu est de préférence à coupure plate, la partie éclairée étant située au-dessous d'une horizontale.

L'unité U est prévue pour commander un allumage progressif des sources S1-S4 en fonction du signal délivré par le capteur de volant E et assurer un effet de balayage lumineux avec défilement du faisceau lumineux et suivi du virage.

La source S1 située à gauche de l'ensemble éclaire moins que les autres vers la droite, c'est-à-dire vers l'intérieur d'un virage à droite. S1 est allumée en premier, puis la source S2, la source S3, la source S4. De préférence, la source précédente dans l'ordre d'allumage reste allumée lorsque la suivante est allumée.

Pour accroître l'effet de balayage, l'ouverture angulaire des faisceaux lumineux fournis par les modules S1-S4 ,croissante de S1 vers S4. L'angle d'ouverture du faisceau de S4 peut atteindre 40°.

Conformément à l'invention comme illustré sur Fig. 4, les axes optiques Y1a-Y4a des modules sont parallèles entre eux mais inclinés vers la droite par rapport à l'axe longitudinal du véhicule. Dans ce cas, l'ouverture angulaire des faisceaux augmente de S1 vers S4.

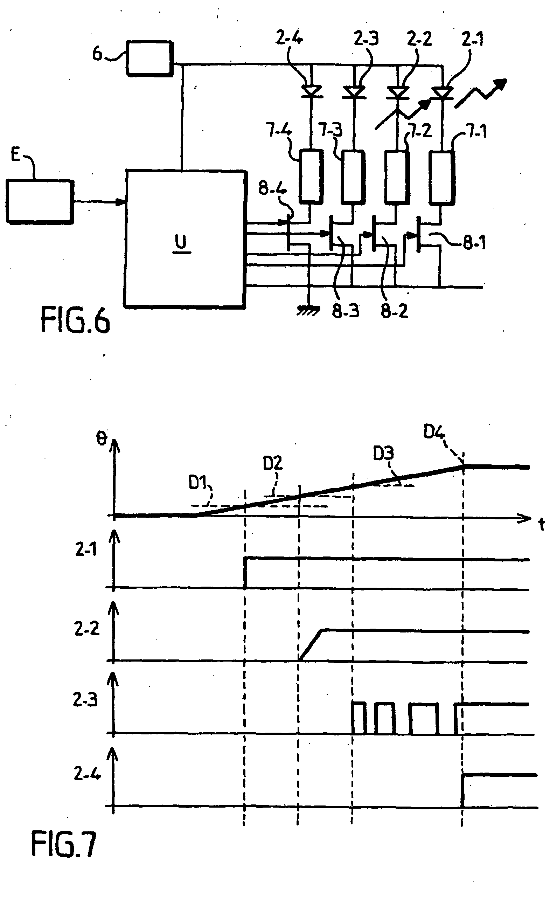

Fig.6 illustre un schéma de commande des diodes électroluminescentes 2.1 à 2.4. Les anodes des diodes sont reliées en parallèle à la borne + d'une source de tension continue 6 par exemple sous 12 V. Les cathodes des diodes sont reliées par l'intermédiaire d'une résistance ballast 7.1 à 7.4 à une électrode d'un transistor de puissance 8.1 à 8.4 dont une autre électrode est reliée à la masse. L'électrode de commande du transistor est reliée à une sortie de l'unité de commande U dont une borne d'entrée reçoit le signal fourni par le capteur de volant E.

L'unité de commande U peut recevoir le signal d'information sur la trajectoire du véhicule à partir de moyens autres qu'un capteur de volant, par exemple à partir d'un navigateur GPS ou d'une caméra qui analyse la route en avant du véhicule, ou d' autres dispositifs équivalents.

Les transistors de puissance 8.1 à 8.4 peuvent être commandés en tout ou rien comme illustré sur Fig.7 en deuxième et dernière ligne pour les LEDs 2.1 et 2.4. En variante, les transistors de puissance sont commandés en tension analogique ou modulée comme décrit ci-après au sujet des LEDs 2.2 et 2.3.

La première ligne de Fig.7 illustre la variation de l'angle de rotation θ du volant porté en ordonnée en fonction du temps t porté en abscisse, lorsque le véhicule effectue un virage. L'allumage de la première LED 2.1 est commandé lorsque l'angle de braquage atteint un premier seuil D1. La deuxième LED 2.2 est allumée lorsque l'angle de braquage atteint un deuxième seuil D2. Dans l'exemple de Fig. 7, l'allumage de la LED 2.2 est effectué selon une modulation linéaire analogique représentée par une rampe inclinée avant d'atteindre le niveau maximum.

La troisième LED 2.3 est allumée lorsque l'angle de braquage atteint un troisième seuil D3. Dans l'exemple de Fig. 7, l'allumage de cette LED s'effectue suivant une modulation par largeur d'impulsion (PWM). Les impulsions deviennent d'autant plus larges pour atteindre une valeur maximale correspondant à une alimentation permanente, selon l'augmentation de l'angle de braquage.

La dernière LED 2.4 est allumée en tout ou rien lorsque l'angle de braquage atteint le seuil maximum D4.

Le schéma de Fig. 5 illustre un défilement du faisceau par modulation de modules à LED S1-S4 non couvert par l'invention.

Les faisceaux principaux de croisement FCa, FCb sont représentés, les deux projecteurs codes étant allumés.

Lorsque le véhicule aborde un virage sur la droite, le module S1 est allumé en premier et produit un faisceau L1, par exemple d'axe parallèle à celui du véhicule. Puis, selon l'angle de braquage, les modules successifs S2, S3, S4 sont allumés, sans extinction des modules précédents, de sorte que l'on obtient des faisceaux L2, L3, L4 de plus en plus inclinés vers la droite, c'est-à-dire vers l'intérieur du virage.

Les sources lumineuses du projecteur fixe de virage situées sur la gauche restent éteintes lors d'un virage à droite,. Lors d'un virage à gauche, le projecteur fixe gauche de virage est allumé, alors que le projecteur fixe droit de virage reste éteint.

L'allumage progressif des diodes électrolumi-nescentes 2.1-2.4, en fonction de l'angle du volant, donne un effet de balayage équivalent à une rotation de faisceau, sans pour autant mettre en oeuvre des pièces mécaniques en mouvement.

Bien que le nombre de quatre sources lumineuses soit avantageux pour réaliser un effet de balayage spectaculaire, sans entraîner une augmentation trop forte du prix de revient, il est possible de réduire le coût en se limitant à deux sources lumineuses dont l'allumage successif crée déjà un effet de balayage.

Les diodes électroluminescentes permettent une modulation de l'intensité lumineuse sans glissement sensible de couleur de la lumière, contrairement à une lampe halogène modulée qui émet une lumière apparaissant de plus en plus blanche lorsque la tension d'alimentation augmente.

Une telle lampe halogène, conjuguée avec une lampe à décharge produisant une lumière blanc bleuté, semble devenir rougeâtre lorsque sa tension d'alimentation augmente.

## Revendications

1. Projecteur lumineux fixe de virage pour véhicule automobile comportant :
- au moins deux sources lumineuses (S1-S4) :
- des moyens (E) sensibles à la trajectoire du véhicule pour fournir un signal dépendant de la nature de la route suivie par le véhicule
- et des moyens (U) pour commander un allumage successif des sources (S1-S4) en fonction du signal délivré et assurer un effet de balayage lumineux, de préférence vers l'intérieur du virage, chaque source lumineuse (S1, S2, S3, S4) étant constituée par un ou plusieurs module(s) (1) à diode électroluminescente (2.1, 2.2, 2.3, 2.4), **caractérisé en ce que** l'ouverture des faisceaux lumineux des sources (S1, S2, S3, S4) est de plus en plus grande vers l'intérieur du virage suivant l'ordre d'allumage des sources, de sorte qu'une source lumineuse suivante éclaire davantage vers l'intérieur d'un virage que la source précédente, et les axes optiques (Y1a, Y2a, Y3a, Y4a) des sources sont parallèles entre eux, tout en étant orientés vers l'intérieur du virage.

2. Projecteur lumineux selon la revendication 1, **caractérisé en ce qu'**il comporte au moins quatre sources lumineuses (S1, S2, S3, S4) propres à être allumées successivement pour assurer un défilement du faisceau lumineux et un suivi du virage.

3. Projecteur lumineux selon la revendication 1 ou 2 , **caractérisé en ce que** la source (S1,S2 ,S3) qui précède, dans l'ordre d'allumage, reste allumée lorsque la source suivante (S2,S3,S4) est allumée.

4. Projecteur lumineux selon la revendication 1, **caractérisé en ce que** l'allumage de chaque diode électroluminescente (2.1, 2.2, 2.3, 2.4) est assuré par un transistor (8.1, 8.2, 8.3, 8.4) commandé par une unité de contrôle (U) qui reçoit le signal de braquage, en particulier en provenance d'un capteur de volant (E).

5. Véhicule automobile équipé d'au moins un projecteur selon l'une au moins des revendications précédentes.

## Patentansprüche

1. Feststehender Kurvenscheinwerfer für Kraftfahrzeuge, mit:
- wenigstens zwei Lichtquellen (S1-S4);
- auf den Fahrweg des Fahrzeugs ansprechenden Mitteln (E) zum Bereitstellen eines Signals, das von der Art der vom Fahrzeug befahrenen Straße abhängt;
- und Mitteln (U) zum Regeln eines nacheinander erfolgenden Einschaltens der Lichtquellen (S1-S4) in Abhängigkeit von dem gelieferten Signal und zum Sicherstellen eines Strahlschwenkeffekts vorzugsweise zum Kurveninneren hin, wobei jede Lichtquelle (S1, S2, S3, S4) aus einem oder mehreren Modulen (1) mit Leuchtdioden (2.1, 2.2, 2.3, 2.4) gebildet ist,
**dadurch gekennzeichnet, dass** der Öffnungswinkel der Lichtbündel der Lichtquellen (S1, S2, S3, S4) in der Abfolge des Einschaltens der Lichtquellen zum Kurveninneren hin immer größer wird, so dass eine nachfolgende Lichtquelle stärker zum Kurveninneren hin leuchtet als die vorangehende Lichtquelle, und dass die optischen Achsen (Y1a, Y2a, Y3a, Y4a) der Lichtquellen zueinander parallel sind, dabei aber zum Kurveninneren hin ausgerichtet sind.

2. Scheinwerfer nach Anspruch 1,
**dadurch gekennzeichnet, dass** er wenigstens vier Lichtquellen (S1, S2, S3, S4) umfasst, die nacheinander eingeschaltet zu werden vermögen, um ein Rollen des Lichtbündels und ein Verfolgen der Kurve zu gewährleisten.

3. Scheinwerfer nach Anspruch 1 oder 2,
**dadurch gekennzeichnet, dass** die in der Abfolge des Einschaltens vorangehende Lichtquelle (S1, S2, S3) eingeschaltet bleibt, wenn die nachfolgende Lichtquelle (S2, S3, S4) eingeschaltet wird.

4. Scheinwerfer nach Anspruch 1,
**dadurch gekennzeichnet, dass** das Einschalten jeder Leuchtdiode (2.1, 2.2, 2.3, 2.4) durch einen Transistor (8.1, 8.2, 8.3, 8.4) erfolgt, der durch eine Steuereinheit (U) geregelt wird, die das insbesondere von einem Lenkwinkelsensor (E) stammende Einschlagsignal empfängt.

5. Kraftfahrzeug, ausgestattet mit wenigstens einem Scheinwerfer nach wenigstens einem der vorhergehenden Ansprüche.

## Claims

1. Fixed bending headlight for a motor vehicle, comprising:
- at least two sources of light (S1 - S4);
- means (E) which are sensitive to the trajectory of the vehicle, in order to provide a signal which is dependent on the nature of the route followed by the vehicle; and
- means (U) for commanding successive lighting of the sources (S1 - S4) according to the signal provided, and to assure an effect of sweeping of light, preferably towards the inside of the bend, each source of light (S1, S2, S3, S4) consisting of one or a plurality of module(s) (1) with LEDs (2.1, 2.2, 2.3, 2.4),
**characterised in that** the opening of the light beams of the sources (S1, S2, S3, S4) is increasingly great towards the inside of the bend, according to the order of switching on of the sources, such that a following source of light lights more towards the inside of a bend than the preceding source, and the optical axes (Y1a, Y2a, Y3a, Y4a) of the sources are parallel to one another whilst being oriented towards the inside of the bend.

2. Headlight according to claim 1, **characterised in that** it comprises at least four sources of light (S1, S2, S3, S4) which can be switched on in succession in order to assure streaming of the light beam and following of the bend.

3. Headlight according to claim 1 or claim 2, **characterised in that** the source (S1, S2, S3) which precedes in the order of switching on remains switched on when the following source (S2, S3, S4) is switched on.

4. Headlight according to claim 1, **characterised in that** the switching on of each LED (2.1, 2.2, 2.3, 2.4) is assured by a transistor (8.1, 8.2, 8.3, 8.4) controlled by a control unit (U) which receives the steering signal which originates in particular from a steering wheel sensor (E).

5. Motor vehicle equipped with at least one headlight according to at least one of the preceding claims.
